# EUROPÄISCHE PATENTSCHRIFT

(11) **EP 1 281 578 B1**
(45) Veröffentlichungstag und Bekanntmachung des Hinweises auf die Patenterteilung: **29.12.2004**
(21) Anmeldenummer: 02017121.1
(22) Anmeldetag: 30.07.2002
(51) Int. Cl.: B60R 13/02

(54) **Verkleidung für ein Fahrzeug**
Vehicle compartment covering
Habillage intérieur de véhicule

(30) Priorität: 30.07.2001 DE 10136917
(43) Veröffentlichungstag der Anmeldung: 05.02.2003
(73) Patentinhaber: Goodrich Hella Aerospace Lighting Systems GmbH, 59557 Lippstadt (DE)
(72) Erfinder: Hessling, André, 59555 Lippstadt (DE); Wisch, Bodo, 28309 Bremen (DE)
(74) Vertreter: Hilleringmann, Jochen, Dipl.-Ing.

(56) Entgegenhaltungen:
- WO-A-00/40436
- DE-A- 19 730 269
- DE-C- 4 445 249

## Beschreibung

Die Erfindung betrifft eine Verkleidung für ein Fahrzeug, insbesondere für den Innenraum eines Fahrzeuges, wobei es sich bei dem Fahrzeug vorzugsweise um ein Luftfahrzeug handelt.

Für die Verkleidung, insbesondere Innenverkleidung von Fahrzeugen, wie beispielsweise Flugzeugen, werden Verkleidungselemente (zumeist aus Kunststoff) eingesetzt, die an Haltestrukturen des Fahrzeuges befestigt sind. So werden beispielsweise die Verkleidungselemente oberhalb der Sitzplätze in einem Flugzeug an Schienen befestigt, und zwar mittels spezieller Befestigungselemente, die an den Verkleidungselementen angebracht sind. Oberhalb der Sitzplätze befinden sich mehrere unterschiedliche Verkleidungselemente und Verkleidungseinheiten, die beispielsweise die Sauerstoffmasken umfassen oder aber Leseleuchten, Luftdüsen, Hinweisanzeigen und Taster oder dergleichen Bedienelemente beinhalten. Die letztgenannten Einheiten werden auch als PSU-Einheiten (Passenger Service Unit) bezeichnet und sind z.B. in WO-A-00/40436 und DE-A-197 30 269 beschrieben.

Aus DE-C-44 45 249 ist eine Verkleidung für einen Fahrzeuginnenraum bekannt, bei der einzelne Verkleidungselemente an Haltelaschen einer tragenden Fahrzeugstruktur gehalten sind. Von zwei benachbarten Verkleidungselementen umgreift das erste Verkleidungselement mit seinem Ende das Ende des benachbarten zweiten Verkleidungselements, um sich mit seinem das Ende des zweiten Verkleidungselement überlappenden Ende an der das zweite Verkleidungselement haltenden Haltelasche abzustützen. Mit anderen Worten sind also an jeder Haltelasche zwei benachbarte Verkleidungselemente gehaltert, und zwar ein Verkleidungselement indirekt, indem es auf dem anderen Verkleidungselement aufliegt und sich in diesem Zustand mit seinem Rand an der Haltelasche abstützt, und das andere Verkleidungselement direkt mittels eines Halteclips. Diese Konstruktion setzt speziell geformte Haltelaschen voraus.

Pro Sitzreihe befinden sich oberhalb der Sitzplätze die zuvor genannten Verkleidungselemente bzw. Verkleidungseinheiten. Je nach Sitzreihenabstand befinden sich zwischen diesen Verkleidungseinheiten weitere Verkleidungselemente, die man auch als Ausgleichspanele bzw. "In-fill"-Panel bezeichnet. Diese Verkleidungselemente sind vergleichsweise leichtgewichtig und verfügen aus Vereinfachungsgründen zum Teil nicht über eigene Befestigungssysteme zur direkten Befestigung an der Haltestruktur des Fahrzeuges, an der die anderen Verkleidungselemente bzw. -einheiten befestigt sind. So ist es beispielsweise im Stand der Technik bekannt, diese "In-fill"-Panel durch spezielle Klammern an einem Verkleidungselement zu befestigen, das seinerseits über Befestigungselemente an der Haltestruktur des Fahrzeuges angebracht ist. Ein gewisser Nachteil bei den bekannten mit Klammern oder dergleichen befestigten Verkleidungselementen besteht darin, dass sich diese Verkleidungselemente unbeabsichtigt lösen können, etwa aufgrund von Vibrationen oder deshalb, weil auf sie beim Verstauen des Gepäcks oder bei der Einnahme des Sitzplatzes durch den Passagier Kräfte ausgeübt werden, die zum Ablösen des Verkleidungselements führen.

Aufgabe der Erfindung ist es daher, eine verbesserte Befestigung eines Verkleidungselements für ein Flugzeug an einem benachbarten Verkleidungselement zu schaffen.

Zur Lösung dieser Aufgabe wird mit der Erfindung eine Verkleidung für ein Fahrzeug, insbesondere für den Innenraum eines Fahrzeuges, und vorzugsweise für ein Flugzeug vorgeschlagen, die versehen ist mit den Merkmalen des Anspruchs 1. Verschiedene Ausgestaltungen der Erfindung ergeben sich aus den Unteransprüchen.

Nach der Erfindung ist das (zweite) Verkleidungselement, das nicht über eigene Befestigungselemente zur Befestigung an einer Haltestruktur des Fahrzeuges verfügt, mit dem ersten Verkleidungselement verbunden, das Befestigungselemente zum Befestigen an der Haltestruktur aufweist. Das Hakenelement umgreift dabei die im Regelfall hochstehende Längsseite des ersten Verkleidungselements und untergreift ein Niederhalteelement. Auf diese Weise ist ein sicherer Zusammenhalt beider Verkleidungselemente durch eine Art Verzahnung gegeben. Dieser Zusammenhalt ist stabil in Bezug auf sämtliche Relativbewegungen beider Verkleidungselemente und insbesondere in Bezug auf Relativbewegungen der Verkleidungselemente, die entlang einer rechtwinkelig zu den Abdeckwänden der Verkleidungselemente verlaufenden Achse gerichtet sind.

Zweckmäßigerweise umfasst das erste Verkleidungselement mehrere Haltepunkte zur Fixierung an dem zweiten Verkleidungselement. Allerdings ist es nach der Erfindung lediglich erforderlich, das zumindest einer der Haltepunkte nach Art des oben beschriebenen Hakenelements ausgebildet ist, das mit der Längsseite und dem Niederhalteelement eines benachbarten zweiten Verkleidungselements zusammenwirkt. Die anderen Haltepunkte brauchen nicht notwendigerweise in Form von Hakenelementen ausgebildet zu sein. Hier reichen beispielsweise Klammern oder andere Verbindungstechniken aus. Zweckmäßig ist es allerdings, wenn auch der zweite Haltepunkt als Hakenelement ausgebildet ist, wobei in diesem Falle es besonders von Vorteil ist, wenn die beiden Hakenelemente mit ihren Hakenöffnungen in entgegengesetzte Richtungen weisen und jeweils Niederhalteelemente untergreifen.

Es ist von Vorteil, wenn die Niederhalteelemente des mit Befestigungselementen ausgebildeten ersten Verkleidungselements für die Ankopplung durch ein zweites Verkleidungselement nicht gesondert vorgesehen werden müssen. So ist es vorteilhaft, wenn man einen für andere Zwecke am ersten Verkleidungselement vorgesehenen Vorsprung oder dergleichen zum Untergreifen durch das Hakenelement verwenden kann.

Hier bietet es sich an, die bei Verkleidungselementen gemäß DE-A-197 30 269, EP-A-1 215 082 und WO-A-00/40436 vorhandenen Achsstifte als Niederhalteelemente zu verwenden. Bei diesen bekannten (ersten) Verkleidungselementen dienen die Achsstifte der schwenkbaren Lagerung von Befestigungselementen, die in C-förmige Halteschienen des Fahrzeuges eingeklipst und dort befestigt werden.

Bei den zuvor genannten bekannten ersten Verkleidungselementen bzw. Verkleidungselementen vom ersten Typ kann nun das Hakenelement des Verkleidungselements vom zweiten Typ den Achsstift, der beidseitig des Befestigungselements im Regelfall frei zugänglich ist, untergreifen. Damit ist also beim Verkleidungselement vom ersten Typ kein gesondertes Element erforderlich, das die Funktion des Niederhalteelements ausübt, was Vorteile bezüglich der Gewichtsreduktion und der Herstellung des Verkleidungselements vom ersten Typ mit sich bringt.

In vorteilhafter Weiterbildung der Erfindung ist vorgesehen, dass jedes Hakenelement Anlageabschnitte aufweist, in denen es das Niederhalteelement nicht nur untergreift sondern auch übergreift, das Niederhalteelement also zwischen den Anlageabschnitten eines Hakenelements eingefasst ist. Hierdurch wird ein noch größerer Zusammenhalt eines Verkleidungselements vom ersten Typ mit einem Verkleidungselement des zweiten Typs nach der Erfindung gewährleistet.

Die Erfindung wird nachfolgend anhand eines Ausführungsbeispiels unter Bezugnahme auf die Zeichnung näher erläutert. Im Einzelnen zeigen dabei:
- Fig. 1: einen teilweisen Schnitt durch die Kabine eines Flugzeuges zur Verdeutlichung der Anbringung von Verkleidungselementen oberhalb der Flugzeugsitze,
- Fig. 2: eine Draufsicht auf die im eingebauten Zustand nicht sichtbaren Rückseite zweier erfindungsgemäß miteinander gekoppelter Verkleidungselemente, und
- Fig. 3: eine Ansicht entlang der Linie III-III der Figur 2.

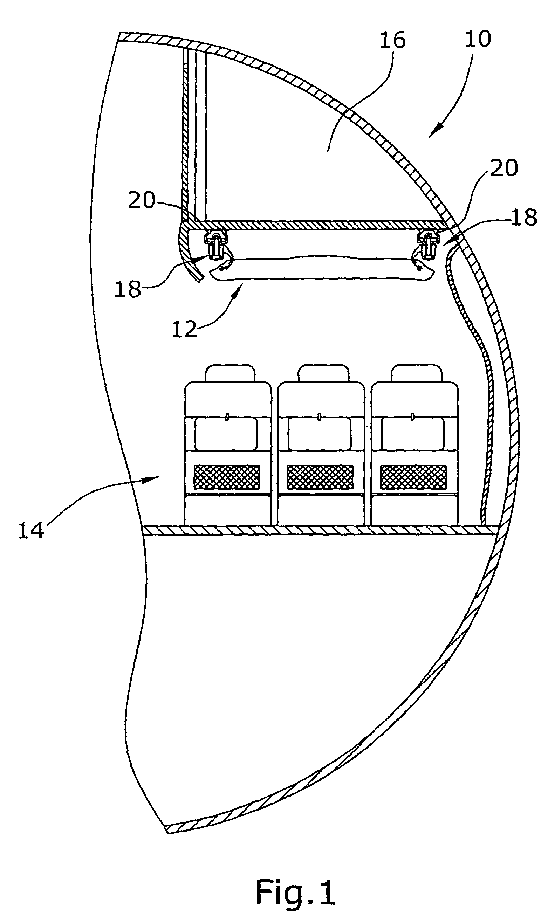

Figur 1 zeigt einen Teilquerschnitt durch eine Flugzeugkabine 10, die mit der erfindungsgemäßen Verkleidung bzw. einem erfindungsgemäßen Verkleidungselement gemäß dem hier beschriebenen Ausführungsbeispiel versehen ist. Wie anhand von Figur 1 zu erkennen ist, ist die Verkleidung 12 oberhalb der Sitzreihen 14 angeordnet, und zwar unterhalb der Gepäckablagefächer 16. Die einzelnen Elemente der Verkleidung 12 weisen unterschiedliche Größe und Bestückung auf. So sind beispielsweise diejenigen Verkleidungselemente, in denen Leseleuchten, Lüftungsdüsen, Schalter bzw. Sauerstoffmasken integriert sind (auch mit erste Verkleidungselemente bzw. Verkleidungselemente vom ersten Typ bezeichnet), über spezielle Befestigungselemente 18 an C-förmigen Halteprofilen 20 befestigt, während leichtgewichtige kleine und schmale Verkleidungselemente (mit zweite Verkleidungselemente bzw. Verkleidungselemente vom zweiten Typ bezeichnet) an jeweils ein erstes Verkleidungselement angehängt sind, selbst also nicht direkt mit den C-förmigen Halteprofilen 20 verbunden sind.

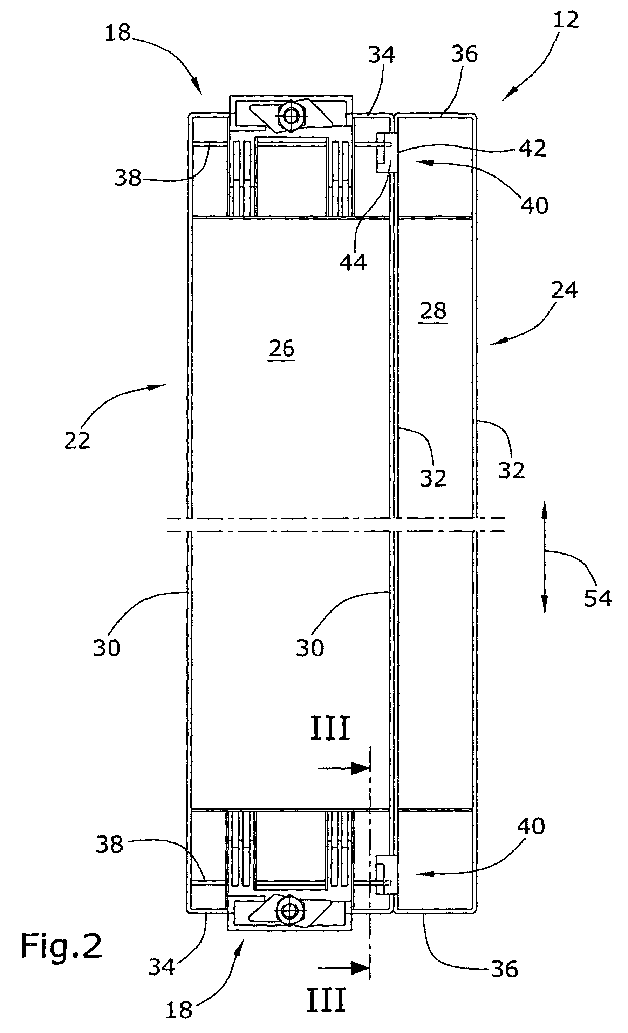

Zwei kombinierte erste und zweite Verkleidungselemente 22,24 sind in Figur 2 gezeigt. Figur 2 gibt die Ansicht auf ihre den Passagieren abgewandten Rückseiten wieder.

Jedes der beiden Verkleidungselemente weist eine Abdeckwand 26,28 auf, die von einem umlaufenden hochstehenden Seitenrand umgeben ist. Dieser Seitenrand verläuft längs zweier Längsseiten 30,32 sowie längs zweier Querseiten 34,36. Das erste Verkleidungselement 22 ist mit zwei Befestigungselementen 18 versehen, die um jeweils einen Achsstift 38 schwenkbar an dem ersten Verkleidungselement 22 gelagert sind. Die beiden Achsstifte 38 bestehen vorzugsweise aus Metall und sind parallel zu den Querseiten 34 sowie rechtwinkelig zu den Längsseiten 30 verlaufend angeordnet. Die beiden Achsstifte 38 befinden sich nahe den einander gegenüberliegenden Enden an den Querseiten 34 des insbesondere aus Kunststoff bestehenden ersten Verkleidungselements 22. Auch das zweite Verkleidungselement 24 besteht im Regelfall aus Kunststoff.

Wie man anhand von Figur 2 erkennen kann, liegen die beiden Verkleidungselemente 22,24 mit jeweils einer ihrer Längsseiten 30,32 aneinander an. Insoweit handelt es sich bei der betreffenden Längsseite 32 des zweiten Verkleidungselements 24 um dessen Anlageseite, mit der es an dem ersten Verkleidungselement 22 anliegt. An dieser Anlageseite 32 befinden sich nun zwei Hakenelemente 40, die nahe dem Übergangsbereich der Anlageseite 32 zu den Querseiten 36 des zweiten Verkleidungselements 24 angeordnet sind. Jedes Hakenelement 40 weist einen in Verlängerung des hochstehenden Randes der Anlageseite 32 ausgebildeten Basisabschnitt 42 auf, der in einen Überbrückungsabschnitt 44 übergeht, welcher quer zum Basisabschnitt 42 verläuft. Der Überbrückungsabschnitt 44 liegt von oben auf dem hochstehenden Rand der Längsseite 30 des ersten Verkleidungselements 22 an, an der wiederum die Anlageseite 32 des zweiten Verkleidungselements 24 anliegt.

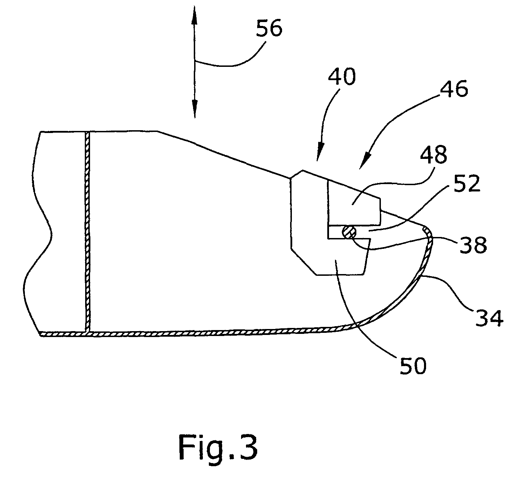

Von dem Überbrückungsabschnitt 44 aus erstreckt sich abwärts, d.h. parallel zum Basisabschnitt 42 ein Hakenabschnitt 46, der einen ersten Anlageabschnitt 48 sowie einen L-förmigen zweiten Anlageabschnitt 50 aufweist. Zwischen beiden Anlageabschnitten 48,50 ist eine (Haken-)Öffnung 52 vorgesehen, die durch einen entsprechenden Abstand der einander zugewandten Ränder der beiden Anlageabschnitte 48,50 gebildet ist. In diese Öffnung 52 ist der Achsstift 38 eingetaucht. Da diese Art der Über- bzw. Untergreifung der Achsstifte 38 an beiden stirnseitigen Enden des ersten Verkleidungselements 22 erfolgt, ist das zweite Verkleidungselement 24 gegen Bewegungen in Richtung des Doppelpfeils 54 der Figur 2 gesichert. Aufgrund des Umstandes, dass die Hakenelemente 40 des zweiten Verkleidungselements 24 die Längsseite 30 des ersten Verkleidungselements 22 umgreifen und mit den zweiten Anlageabschnitten 50 die Achsstifte 38 untergreifen, ist das zweite Verkleidungselement 24 auch bezüglich Relativbewegungen am ersten Verkleidungselement 22 sicher gehalten, die in einer quer zu den Abdeckwänden 26,28 (senkrecht zur Zeichenebene gemäß Figur 2 bzw. siehe Doppelpfeil 56 gemäß Figur 3) gerichtet sind.

In der Zeichnung nicht dargestellt ist, dass die beiden Verkleidungselemente 22,24 zusätzlich noch mit mindestens einer Klammer zusammengehalten sein können, die auf die aufragenden Seitenränder an den aneinanderliegenden Längsrändern aufgesteckt ist. Derartige Klammern sind im Stand der Technik grundsätzlich bekannt. Sie bestehen aus Metall und/oder Kunststoff und sind reib- und/oder formschlüssig an den Seitenrändern gehalten.

## Patentansprüche

1. Verkleidung für ein Fahrzeug, insbesondere für den Innenraum eines Fahrzeuges, und vorzugsweise für ein Luftfahrzeug, mit
- einem ersten Verkleidungselement (22) mit zwei Querseiten (34) und zwei Längsseiten (30), wobei das erste Verkleidungselement (22) eine Abdeckwand (26) mit einer Vorder- sowie einer Rückseite aufweist, und
- einem zweiten Verkleidungselement (24) mit einer Anlageseite (32) zur Anlage an der einen Längsseite (30) des ersten Verkleidungselements (22),
**dadurch gekennzeichnet,**
- **dass** an der Rückseite der Abdeckwand (26) des ersten Verkleidungselements (22) ein Niederhalteelement (38) angeordnet ist, und
- **dass** das zweite Verkleidungselement (24) ein Hakenelement (40) zum Umgreifen der Längsseite (30) des ersten Verkleidungselements (22) und zum Untergreifen des Niederhalteelements (38) des ersten Verkleidungselements (22) aufweist.

2. Verkleidung nach Anspruch 1, **dadurch gekennzeichnet, dass** zwei Niederhalteelemente (38) vorgesehen sind, die insbesondere an gegenüberliegenden Enden des ersten Verkleidungselements (22) angeordnet sind, und dass das zweite Verkleidungselement (24) zwei Hakenelemente (40) aufweist.

3. Verkleidung nach Anspruch 1 oder 2, **dadurch gekennzeichnet, dass** das Niederhalteelement (38) ein Achsstift ist, der in einem Eckenbereich einer Querseite (34) und einer Längsseite (30) des ersten Verkleidungselements (22) angeordnet ist und an dem ein Befestigungselement (18) zur Befestigung des ersten Verkleidungselements (22) an dem Fahrzeug schwenkbar gelagert ist.

4. Verkleidung nach einem der Ansprüche 1 bis 3, **dadurch gekennzeichnet, dass** die beiden Verkleidungselemente (22,24) jeweils einen aufragenden, die betreffende Abdeckwand (26,28) begrenzenden Seitenrand aufweisen, diese Seitenränder die Längs- und Querseiten (30,34,32,36) bilden und dass das Hakenelement (40) den aufragenden Seitenrand des ersten Verkleidungselements (22) umgreift.

5. Verkleidung nach einem der Ansprüche 1 bis 4, **dadurch gekennzeichnet, dass** das erste Verkleidungselement (22) zwei jeweils um einen Achsstift schwenkbare Befestigungselemente (18) aufweist, die in den Eckenbereichen einer Längsseite (30) und der beiden angrenzenden Querseiten (34) angeordnet sind, und dass das zweite Verkleidungselement (24) zwei Hakenelemente (40) zum Umgreifen dieser Längsseite (30) des ersten Verkleidungselements (22) und zum Untergreifen jeweils eines Achsstiftes aufweist.

6. Verkleidung nach einem der Ansprüche 1 bis 5, **dadurch gekennzeichnet, dass** jedes Hakenelement (40) Anlageabschnitte (48,50) zur Anlage an einem Niederhalteelement (38) innerhalb diametral gegenüberliegender Bereiche des Niederhalteelements (38) aufweist.

7. Verkleidung nach einem der Ansprüche 2 bis 6 oder nach Anspruch 2 und einem der Ansprüche 3 bis 6, **dadurch gekennzeichnet, dass** die Hakenöffnungen (52) der gegenüberliegenden Hakenelemente (40) entgegengesetzt und parallel zur Längsseite (32) orientiert sind.

8. Verkleidung nach einem der Ansprüche 2 bis 7 oder nach Anspruch 2 und einem der Ansprüche 3 bis 7, **dadurch gekennzeichnet, dass** die Hakenöffnung (52) nach außen hin verjüngend ausgebildet ist, derart, dass sich das Niederhalteelement (38) nach dem Einsetzen und kurzen Rücksetzen in die Hakenöffnung (52) in der nunmehr erreichten Montageposition zu dem Hakenelement (40) im Klemmsitz befindet.

9. Verkleidung nach einem der Ansprüche 1 bis 8, **dadurch gekennzeichnet, dass** die Verkleidungselemente (24) als Spritzgießteil einstückig ausgebildet sind.

10. Verkleidung nach einem der Ansprüche 3 bis 9 oder nach Anspruch 3 und einem der Ansprüche 4 bis 9, **dadurch gekennzeichnet, dass** der Achsstift aus einem metallischen Material besteht.

## Claims

1. A covering for a vehicle, particularly for the interior of a vehicle, and preferably for an aircraft, comprising
- a first covering element (22) with two transverse sides (34) and two longitudinal sides (30), the first covering element (22) comprising a covering wall (26) with a front side as well as a rear side, and
- a second covering element (24) with an abutting side (32) for abutting on the one longitudinal side (30) of the first covering element (22),
**characterized in**
- **that** a holding-down element (38) is arranged at the rear side of the covering wall (26) of the first covering element (22), and
- **that** the second covering element (24) comprises a hook element (40) for encompassing the longitudinal side (30) of the first covering element (22) and for engaging under the holding-down element (38) of the first covering element (22).

2. The covering according to claim 1, **characterized in that** two holding-down elements (38) are provided which are particularly arranged at opposed ends of the first covering element (22), and that the second covering element (24) comprises two hook elements (40).

3. The covering according to claim 1 or 2, **characterized in that** the holding-down element (38) is an axle pin which is arranged in a comer portion of a transverse side (34) and a longitudinal side (30) of the first covering element (22) and on which a fastening element (18) for fastening the first covering element (22) to the vehicle is pivotally supported.

4. The covering according to one of claims 1 to 3, **characterized in that** each of the two covering elements (22,24) comprises an upright lateral edge defining the respective covering wall (26,28), said lateral edges form the longitudinal and transverse sides (30,34,32,36), and that the hook element (40) encompasses the upright lateral edge of the first covering element (22).

5. The covering according to one of claims 1 to 4, **characterized in that** the first covering element (22) comprises two fastening elements (18) each of which is adapted to be pivoted about an axle pin and arranged in the corner portions of a longitudinal side (30) and the two adjacent transverse sides (34), and that the second covering element (24) comprises two hook elements (40) for encompassing this longitudinal side (30) of the first covering element (22) and for engaging under one axle pin, respectively.

6. The covering according to one of claims 1 to 5, **characterized in that** each hook element (40) comprises abutting sections (48,50) for abutting on a holding-down element (38) within diametrically opposed portions of the holding-down element (38).

7. The covering according to one of claims 2 to 6 or according to claim 2 and one of claims 3 to 6, **characterized in that** the hook openings (52) of the opposed hook elements (40) are oriented oppositely and in parallel with the longitudinal side (32).

8. The covering according to one of claims 2 to 7 or according to claim 2 and one of claims 3 to 7, **characterized in that** the hook opening (52) is configured so as to taper outward in such a manner that the holding-down element (38), after being inserted and briefly reset into the hook opening (52), is arranged in press fit in the now attained mounting position to the hook element (40).

9. The covering according to one of claims 1 to 8, **characterized in that** the covering elements (24) are manufactured as an integral injection molded part.

10. The covering according to one of claims 3 to 9 or according to claim 3 and one of claims 4 to 9, **characterized in that** the axle pin consists of a metallic material.

## Revendications

1. Habillage intérieur pour un véhicule, en particulier pour l'habitacle d'un véhicule et de préférence d'un avion, comprenant :
- un premier élément d'habillage (22) avec deux côtés transversaux (34) et avec deux côtés longitudinaux (30), ledit premier élément d'habillage (22) comportant une paroi de couverture (26) avec un côté avant et un côté arrière, et
- un second élément d'habillage (24) avec un côté d'appui (32) pour l'appui contre un côté longitudinal (30) du premier élément d'habillage (22),
**caractérisé en ce que** :
-- un élément de maintien vers le bas (38) est agencé sur le côté arrière de la paroi de couverture (26) du premier élément d'habillage (22), et
-- le second élément d'habillage (24) comporte un élément en crochet (40) pour entourer le côté longitudinal (30) du premier élément d'habillage (22) et pour engager par le dessous l'élément de maintien vers le bas (38) du premier élément d'habillage (22).

2. Habillage intérieur selon la revendication 1, **caractérisé en ce qu'**il est prévu deux éléments de maintien vers le bas (38), lesquels sont agencés en particulier à des extrémités opposées du premier élément d'habillage (22), et **en ce que** le second élément d'habillage (24) comporte deux éléments en crochet (40).

3. Habillage intérieur selon la revendication 1 ou la revendication 2, **caractérisé en ce que** l'élément de maintien vers le bas (38) est une tige, laquelle est agencée dans une région de coin d'un côté transversal (34) et d'un côté longitudinal (30) du premier élément d'habillage (22) et sur laquelle est monté en pivotement un élément de fixation (18) en vue de la fixation du premier élément d'habillage (22) sur le véhicule.

4. Habillage intérieur selon l'une des revendications 1 à 3, **caractérisé en ce que** les deux éléments d'habillage (22, 24) comportent chacun une bordure latérale en dépassement, qui délimite la paroi de couverture concernée (26, 28), lesdites bordures latérales formant les côtés longitudinaux et les côtés transversaux (30, 34, 32, 36), et **en ce que** l'élément en crochet (40) entoure la bordure latérale en dépassement du premier élément d'habillage (22).

5. Habillage intérieur selon l'une des revendications 1 à 4, **caractérisé en ce que** le premier élément d'habillage (22) comprend deux éléments de fixation (18) qui sont capables de pivoter respectivement autour d'une tige et qui sont agencés dans les régions de coin d'un côté longitudinal (30) et des deux côtés transversaux adjacents (34), et **en ce que** le second élément d'habillage (24) comprend deux éléments en crochet (40) pour entourer ce côté longitudinal (30) du premier élément d'habillage (22) et pour engager par le dessous une tige respective.

6. Habillage intérieur selon l'une des revendications 1 à 5, **caractérisé en ce que** chaque élément en crochet (40) comprend des tronçons d'appui (48, 50) pour l'appui contre un élément de maintien vers le bas (38), à l'intérieur de zones diamétralement opposées de l'élément de maintien vers le bas (38).

7. Habillage intérieur selon l'une des revendications 2 à 6, ou selon la revendication 2 et l'une des revendications 3 a 6, **caractérisé en ce que** les ouvertures en crochet (52) des éléments en crochet opposés (40) sont orientées en sens opposé et parallèlement au côté longitudinal (32).

8. Habillage intérieur selon l'une des revendications 2 à 7, ou selon la revendication 2 et l'une des revendications 3 à 7, **caractérisé en ce que** l'ouverture en crochet (52) est réalisée en rétrécissement en direction de l'extérieur, de telle façon que l'élément de maintien vers le bas (38) se trouve bloqué par croisement, après mise en place et bref retrait dans l'ouverture en crochet (52), dans la position de montage désormais atteinte par rapport à l'élément en crochet (40).

9. Habillage intérieur selon l'une des revendications 1 à 8, **caractérisé en ce que** les éléments d'habillage (24) sont réalisés d'une seule pièce comme des pièces coulées par injection.

10. Habillage intérieur selon l'une des revendications 3 à 9, ou selon la revendication 3 et l'une des revendications 4 à 9, **caractérisé en ce que** la tige est réalisée en un matériau métallique.
